# FASCICULE DE BREVET EUROPEEN

(11) **EP 0 647 561 B1**
(45) Date de publication et mention de la délivrance du brevet: **10.12.1997**
(21) Numéro de dépôt: 94440060.5
(22) Date de dépôt: 20.09.1994
(51) Int. Cl.: B65B 21/06, B65G 47/08, B65G 47/84, B65B 21/20

(54) **Dispositif pour la formation de lots de produits en vue de leur conditionnement**
Vorrichtung zum Gruppieren von Gegenständen zum anschliessenden Verpacken
Device for forming groups of products in view of their packaging

(30) Priorité: 24.09.1993 FR 9311546; 17.12.1993 FR 9315407
(43) Date de publication de la demande: 12.04.1995
(73) Titulaire: FCP SA, 75008 Paris (FR)
(72) Inventeur: Flix, Jean-Marie, F-10120 Saint-Germain (FR)
(74) Mandataire: Arbousse-Bastide, Jean-Claude Philippe

(56) Documents cités:
- DE-B- 1 152 352
- US-A- 4 191 003

## Description

La présente invention a pour objet un dispositif pour la formation, en vue de leur conditionnement, de lots de produits amenés par un convoyeur et disposés en rangées jointives, du type décrit par exemple dans le document US-A-4 191 003.

On connaît actuellement des systèmes de séparation de produits à l'aide de vis à pas variables, mais celles-ci ne peuvent former des lots que sous la forme d'une rangée d'unités ou de plusieurs rangées placées côte à côte avec un écart relativement important entre elles, et non des lots de produits groupés.

Dans les installations automatiques de manipulation de bouteilles ou de flacons verticaux en vue de leur encartonnage on utilise depuis longtemps des séries de têtes preneuses, montées sur le même support commun d'une machine, d'un vérin ou tout autre dispositif, pourvues de moyens de préhension destinés à saisir dans un premier poste par exemple des goulots de bouteilles, et à relacher dans un autre poste, où ils sont conditionnés, les lots ainsi formés.

Toutefois ces types d' installation ne permettent pas de travailler en continu et comportent des moyens mécaniques complexes susceptibles d'avoir des pannes nécessitant des interruptions de fonctionnement des chaînes de production pour la mise en place de nouvelles pièces.

La présente invention a pour objet de remédier à ces inconvénients en proposant un dispositif permettant de travailler en continu sans nécessité de transferer d'un poste à un autre des produits tels que des bouteilles.

Le dispositif selon l'invention, destiné à être placé à l'arrivée des produits à conditionner transportés par un convoyeur et disposés en rangées jointives, et caractérisé essentiellement par les caractéristiques techniques de la revendication 1, comprend une chaîne ou une courroie de transfert tendue entre deux roues d'entrainement d'axes verticaux et munie de moyens de fixation régulièrement espacés, destinés chacun à la solidarisation d'un chariot comportant un élément mobile de séparation et de maintien, de type coiffe, avec ou sans préhenseur, ayant pour fonction de couvrir un certain nombre de produits pour en former un lot, l'un des brins de ladite chaîne comportant deux décrochements, le premier situé à courte distance après la roue d'amenée des chariots, permettant de les désolidariser de la chaîne à leur passage, la fixation desdits chariots à la chaîne étant alors relayée par engagement, dans la gorge d'une vis à pas variable d'axe parallèle à la droite joignant les deux points de décrochement, d'un galet solidaire dudit chariot, qui poursuit l'entraînement du chariot, et donc du lot, en créant progressivement un espace croissant entre lesdits chariots, et donc entre les lots successifs, les chariots venant se raccrocher à la chaîne lorsqu'ils arrivent au niveau du deuxième décrochement situé à courte distance avant la roue de retour des chariots.

Le séquencement des opérations est le suivant: dans un premier temps les chariots sont amenés, à la vitesse de la chaîne de transfert, au dessus des produits à conditionner, vers le premier décrochement où leur vitesse est ralentie lors du relai effectué par engagement des galets dans la vis à pas variable, dont le pas se réduit d'abord sur une certaine longueur de ladite vis pour permettre de placer côte à côte un certain nombre de chariots dont la coiffe est alors translatée temporairement de manière à couvrir une quantité de produits déterminée formant un lot, après quoi la vitesse des chariots est accrue par augmentation du pas de la vis en même temps qu'ils sont écartés les uns des autres d'une certaine distance en vue de permettre l'encartonnage ultérieur des lots, et enfin, en arrivant au niveau du deuxième décrochement, situé sensiblement à la sortie de la vis à pas variable, lesdits chariots sont raccrochés à la chaîne de transfert, la coiffe regagnant sa position initiale, tandis que le lot de produits est pris en charge par une deuxième chaîne munie de moyens de maintien desdits lots en vue de leur encartonnage.

Dans un mode de rélisation particulier permettant la formation de lots de configuration variable par déplacement relatif des produits les uns par rapport aux autres et/ou par prélèvement, sur la file d'attente, d'un nombre de produits différent du nombre de produits formant le lot, les coiffes comportent d'une part des moyens de préhension, connus de l'homme du métier, agissant lors de leur remontée, et permettant de saisir une ou plusieurs unités de produits, lesdits moyens de préhension étant commandés par un automate programmable définissant les unités qui doivent être retirées du lot et réintégrées dans la ligne d'arrivée des produits; et d'autre part lesdites coiffes peuvent comprendre plusieurs compartiments de forme parallélépipédique destinés à recouvrir chacun une rangée de produits et mobiles en translation l'un par rapport à l'autre sous l'effet de moyens appropriés tels qu'un jeu de bielles reliant entre eux les différents compartiments et lui-même relié à un dispositif mécanique approprié commandant le déplacement relatif d'un ou de plusieurs compartiments par rapport aux autres.

Les avantages et les caractéristiques de la présente invention ressortiront plus clairement de la description qui suit et qui se rapporte au dessin annexé, fourni à titre de simple illustration de l'invention, vis à vis de laquelle il ne présente aucun caractère limitatif.

Dans le dessin annexé :
- la figure 1 représente une vue schématique en perspective d'un dispositif selon l'invention appliqué au conditionnement de lots de bouteilles.
- les figures 2a et 2b représentent des vues schématiques en plan d'une coiffe selon un mode de réalisation particulier, dans deux configurations différentes.

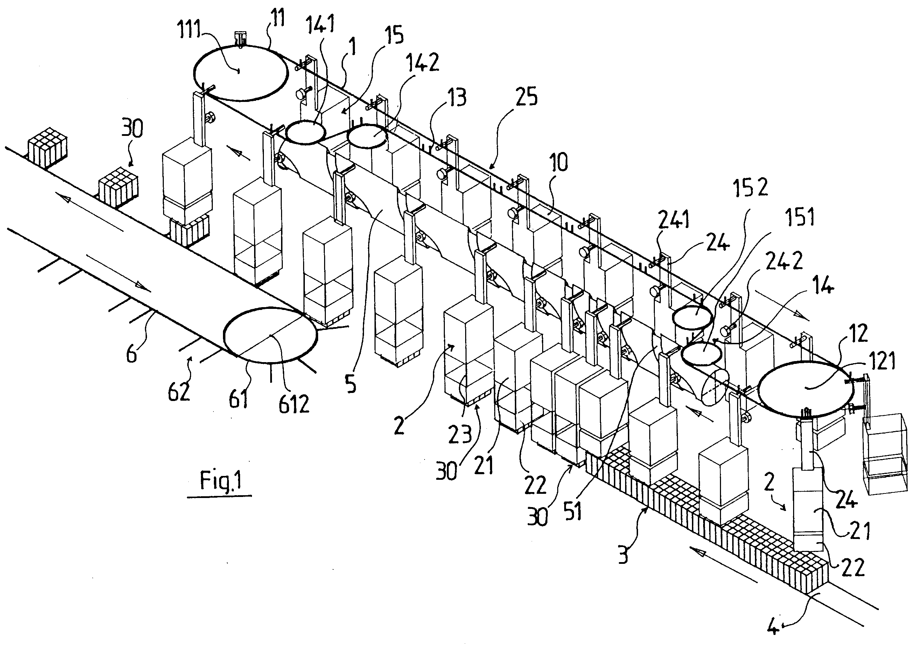

Si on se réfère à la figure 1 on peut voir que le dispositif selon l'invention comporte une chaîne 1 tendue entre deux roues d'entraînement 11 et 12 d'axes verticaux 111 et 121 et munie de paires d'ergots 13 régulièrement espacées, des chariots 2 comprenant un corps 21 solidaire à sa partie inférieure d'une coiffe 22 mobile en translation verticale grâce à un vérin hydraulique, non représenté, et guidée par des tiges 23, le corps 21 comportant à sa partie supérieure une patte verticale 24 à l'extrémité de laquelle est fixé un doigt d'accrochage 241 permettant la solidarisation du chariot 2 à la chaîne 1 par insertion dudit doigt d'accrochage 241 dans une paire d'ergots 13, la patte verticale 24 comportant en outre en son milieu un galet 242 d'axe parallèle au doigt 241.

On peut remarquer également que la chaîne 1 comporte sur son brin 10 deux décrochements 14 et 15 crées chacun par deux roues libres 141, 142 et 151, 152 situées dans le même plan horizontal et en dessous desquelles est positionnée une vis 5 a gorge 51 de pas variable, dont l'axe est parallèle au brin 25 rectiligne de la chaîne 1 et dont la longueur est approximativement égale à la distance séparant les deux roues 151 et 141 les plus proches des roues d'entraînement 11 et 12 de la chaîne 1.

La roue d'amenée 12 des chariots 2 se trouve approximativement au niveau et au dessus de l'arrivée des bouteilles 3, disposées debout sur un convoyeur 4 et présentées en quatre rangées jointives.

De plus on peut voir une deuxième chaîne 6 tendue entre deux roues d'axe verticaux dont seuls la roue 61 et son axe 612 sont représentés, disposée parallèlement à la chaîne 1 et sur laquelle sont fixées radialement des paires de taquets 62 espacés de la largeur d'un lot, en l'occurence ici un lot de douze bouteilles.

Le fonctionnement du dispositif est le suivant: les chariots 2 arrivent par la roue 12 à une vitesse v, la coiffe 22 étant en position haute au dessus des bouteilles 3 à conditionner, puis ils rencontrent le décrochement 14 qui désolidarise le doigt 241 de la paire d'ergots 13 alors que simultanément le galet 242 pénètre dans la gorge 51 de la vis à pas variable 5 et ils sont alors décélérés par diminution du pas de la vis jusqu'à une vitesse v' suffisament faible pour que la coiffe 22 puisse descendre et couvrir un lot 30 de douze bouteilles 3, qui est alors pris en charge par le chariot 2 et la coiffe 22, glissant sur le convoyeur 4, et qui est ensuite accéléré par augmentation du pas de la vis 5 jusqu'à retrouver approximativement la vitesse v, une paire de taquets 62 de la chaîne 6 venant alors enserrer le lot 30 de bouteilles 3 tandis que le chariot 2 rencontre le décrochement 15 et est repris en charge par la chaîne 1 grâce à la solidarisation du doigt 241 à une paire d'ergots 13 alors que le galet 242 quitte le pas de la vis 5, la coiffe 22 étant simultanément remontée en position haute en libérant le lot 31 maintenu par les taquets 62.

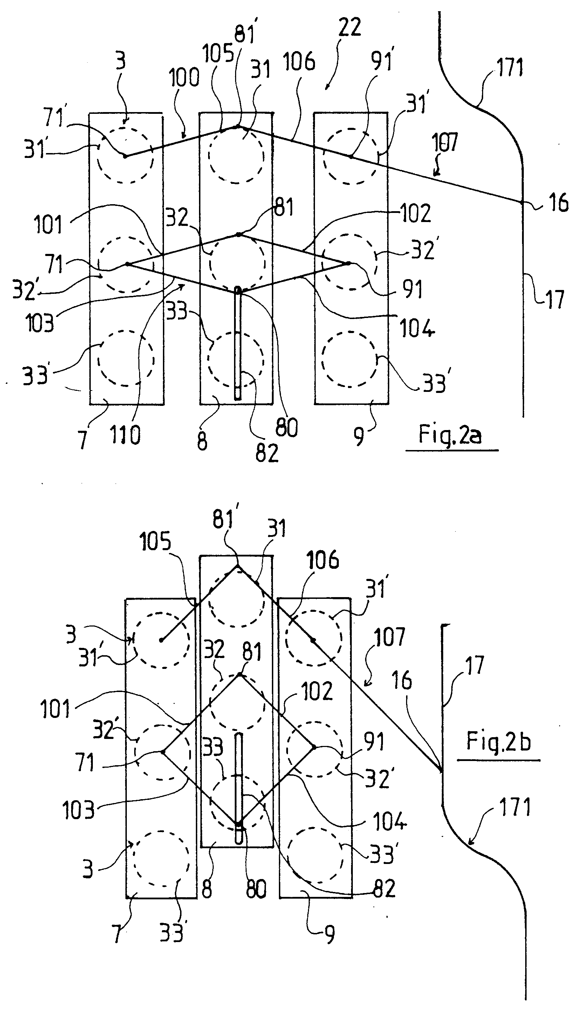

Si on se réfère maintenant aux figures 2a et 2b on peut voir qu'une coiffe 22 se compose essentiellement de trois éléments de forme parallèlépipédique 7,8 et 9 reliés entre eux par des biellettes 100 dont quatre biellettes 101,102,103 et 104 forment un parallélogramme déformable 110 105, les biellettes 101 et 102 étant articulées à leurs deux extrémités autour d'axes 71, 81 et 91 fixés respectivement sur les éléments 7, 8 et 9, les axes 71 et 91 étant sur la même ligne lorsque les éléments 7, 8 et 9 sont parfaitement alignés et l'axe 81 se trouvant en avant de manière à former un certain angle entre les biellettes 101 et 102, alors que les biellettes 103 et 104 sont articulées à l'une de leurs extrémités autour des axes 71 et 91 et à leur autre extrémité autour d'un axe 80 pouvant se déplacer librement dans un guide oblong 82 ménagé longitudinalement dans l'élément 8.

Deux biellettes 105 et 106 sont parallèles aux biellettes 101 et 102 et sont articulées autour d'axes 71',81' et 91', situés dans le même alignement que les axes 71,81 et 91 et fixés à l'extrémité des éléments 7,8 et 9, la biellette 106 comportant un prolongement 107 portant à son extrémité libre un galet 16 venant en butée contre un guide 17 comprenant un décrochement 171.

Ainsi, en fonctionnement du dispositif représenté en figure 1, lorsque le galet 16 rencontre le décrochement 171, l'élément 9 est retenu et amené par l'intermédiaire des biellettes 102 et 106 contre l'élément 8 en retrait de celui-ci, provoquant par la déformation du parallèlogramme 110 le rapprochement de l'élément 7 de l'élément 8 à la même hauteur que l'élément 9, ce qui entraîne un déplacement des bouteilles 3 alignées sous l'élément 8 par rapport aux bouteilles 3' maintenues par les éléments 7 et 9, conférant une configuration différente au lot ainsi formé.

De plus les éléments 7,8 et 9 peuvent comprendre des moyens de retenue, non représentés, connus de l'homme de l'art, permettant de retenir certaines bouteilles 3 lors de la remontée de la coiffe 22, les unités prélevées étant réintégrées dans la ligne d'arrivée des produits 3, ce qui permet de modifier d'une autre manière la configuration du lot en faisant varier le nombre de produits le constituant.

Dans le mode de réalisation représenté seule la bouteille 31 est retenue, les deux autres bouteilles 32 et 33 se trouvant respectivement entre les bouteilles 31' et 32' et 32' et 33'.

## Revendications

1. Dispositif pour la formation, en vue de leur conditionnement, de lots de produits amenés par un convoyeur et disposés en rangées jointives, caractérisé en ce qu'il comprend une chaîne ou courroie de transfert (1) tendue entre deux roues d'entraînement (11,12) d'axes verticaux (111,121) et munie de moyens d'entrainement (13) régulièrement espacés destinés chacun au maintien d'un chariot (2) comportant un moyen de maintien et de séparation (22) mobile destiné à former un lot (30) de produits (3), l'un des brins (10) de ladite chaîne (1) comportant deux décrochements (14, 15) dont le premier (14), situé à courte distance après la roue d'amenée (12) des chariots (2), permet de les désolidariser de la chaîne (1) alors qu'un galet (242) solidaire dudit chariot (2) s'engage dans la gorge (51) d'une vis à pas variable (5) dont l'axe est parallèle à la droite reliant les deux points de décrochement (14, 15) et dont la longueur est approximativement égale à la distance séparant lesdits deux points de décrochement (14, 15).

2. Dispositif selon la revendication 1 caractérisé en ce que la chaîne (1) comporte des paires d'ergots (13) dans chacun desquelles s'insère un doigt d'accrochage (241) fixé à l'extrémité d'une patte de liaison (24) solidaire du corps (21) d'un chariot (2) solidarisé à sa partie inférieure à une coiffe mobile (22).

3. Dispositif selon l'une quelconque des revendications prédédentes, caractérisé en ce que les deux décrochements (14, 15) de la chaîne (1) sont créés chacun par deux roues (141, 142 ; 151,152) situées dans le même plan horizontal que les roues (11) et (12) et en ce que la vis à pas variable (5) est disposée en dessous des roues d'extrémité (141, 151) desdits décrochements (14,15), parallèlement au plan de ladite chaîne, sa longueur étant approximativement égale à la distance séparant lesdites roues d'extrémité (141, 151).

4. Dispositif selon l'une quelconque des revendications précédentes, caractérisée en ce que le pas de la vis (5) diminue d'abord après le premier décrochement (14), puis augmente jusqu'au deuxième décrochement (15).

5. Dispositif selon l'une quelconque des revendications caractérisé en ce qu'une deuxième chaîne (6), disposée parallèlement à la chaîne (1), comporte des paires de taquets (62) espacés de la largeur d'un lot (30), qui viennent enserrer lesdits lots (30) avant la remontée de la coiffe mobile (22) du chariot (2).

6. Dispositif selon la revendication 1 caractérisé en ce que les coiffes (22) comporte des moyens de préhension agissant lors de leur remonté et permettant de saisir plusieurs unités de produits.

7. Dispositif selon la revendication 1 ou la revendication 6 caractérisé en ce que les coiffes (22) comprennent plusieurs compartiments de formes parallélépipédique (7,8,9) mobiles en translation l'un par rapport à l'autre sous l'effet d'un jeu de bielles (100) reliant entre eux les différents compartiments (7,8,9) et lui même relié à un dispositif mécanique (107,16,17) commandant le déplacement relatif d'un ou de plusieurs desdits compartiments par rapport aux autres.

## Claims

1. Apparatus for the formation, for packaging thereof, of groups of products supplied by a conveyor and disposed in contiguous rows, characterised in that it comprises a transfer chain or belt (1) tensioned between two drive wheels (11, 12) with their axes (111, 121) vertical and provided with regularly spaced entrainment means (13) each intended to hold a carriage (2) comprising a movable holding and separation means (22) intended to form a group (30) of products (3), one of the runs (10) of said chain (1) comprising two offset portions (14, 15) of which the first (14), disposed at a short distance after the supply wheel (12) for the carriages (2), permits them to be disengaged from the chain (1) while a roller (242) which is fixed with respect to said carriage (2) engages into the groove (51) of a screw (5) which is of a variable pitch and whose axis is parallel to the straight line connecting the two offset points (14, 15) and the length of which is approximately equal to the distance separating said two offset points (14, 15).

2. Apparatus according to claim 1 characterised in that the chain (1) comprises pairs of lugs (13), into each of which is inserted a latching finger (241) fixed to the end of a connecting leg (24) fixed with respect to the body (21) of a carriage (2) which is secured in its lower part to a movable cap (22).

3. Apparatus according to either one of the preceding claims characterised in that the two offset portions (14, 15) of the chain (1) are each created by two wheels (141, 142; 151, 152) disposed in the same horizontal plane as the wheels (11) and (12), and that the variable-pitch screw (5) is disposed below the end wheels (141, 151) of said offset portions (14, 15), in parallel relationship with the plane of said chain, its length being approximately equal to the distance separating said end wheels (141, 151).

4. Apparatus according to any one of the preceding claims characterised in that the pitch of the screw (5) first decreases after the first offset portion (14) and then increases to the second offset portion (15).

5. Apparatus according to any one of the preceding claims characterised in that a second chain (6) which is disposed parallel to the chain (1) comprises pairs of dogs (62) which are spaced by the width of a group (30) and which come to embrace said groups (30) prior to the upward movement of the movable cap (22) of the carriage (2).

6. Apparatus according to claim 1 characterised in that the caps (22) comprise gripping means which act upon upward movement thereof and which permit a plurality of units of products to be seized.

7. Apparatus according to claim 1 or claim 6 characterised in that the caps (22) comprise a plurality of compartments (7, 8, 9) of parallelepipedic shape which are movable with a translatory movement with respect to each other under the effect of a set of rods (100) interconnecting the different compartments (7, 8, 9) and itself connected to a mechanical device (107, 16, 17) controlling the relative displacement of one or more of said compartments with respect to the others.

## Patentansprüche

1. Vorrichtung zur Bildung von durch einen Förderer zugeführten, in aneinandergrenzenden Reihen angeordneten Produktgruppen zum deren Verpacken, dadurch gekennzeichnet, daß sie eine Kette oder ein Überführungsband (1) aufweist, die zwischen zwei senkrechte Achsen (111, 121) aufweisenden Antriebsrädern (11, 12) gespannt und mit in regelmäßigen Abständen angebrachten Antriebsmitteln (13) versehen ist, die je für das Halten eines ein zur Bildung einer Gruppe (30) von Produkten (3) bestimmtes bewegliches Halte- und Trennmittel (22) umfassenden Wagens (2) sorgen, wobei das eine Trum (10) der besagten Kette (1) zwei Absätze (14, 15) umfaßt, wobei der nach dem Lieferrad (12) der Wagen (2) im kurzen Abstand liegende erste Absatz (14) deren Trennung von der Kette (1) erlaubt, während eine fest mit dem besagten Wagen (2) verbundene Rolle (242) in die Nut (51) einer Schraube (5) mit einstellbarem Gang eingreift, deren Achse parallel zu der die beiden besagten Absatzstellen (14, 15) verbindenden Gerade läuft und deren Länge ungefähr dem die beiden Absatzstellen (14, 15) trennenden Abstand gleich ist.

2. Vorrichtung nach Anspruch 1, dadurch gekennzeichnet, daß die Kette (1) Stiftenpaare (13) umfaßt, in welche je ein an einem Ende einer fest mit dem Körper (21) eines Wagens (2) verbundenen Verbindungslasche (24) befestigter Hakenfinger (241) einführbar ist, wobei der Wagen fest an seinem unteren Teil mit einem beweglichen Deckel (22) verbunden ist.

3. Vorrichtung nach irgendeinem der vorhergehenden Ansprüche, dadurch gekennzeichnet, daß beide Absätze (14, 15) der Kette (1) je durch zwei in der gleichen waagerechten Ebene wie die Räder (11) und (12) liegende Räder (141, 142 ; 151, 152) gebildet sind und daß die Schraube (5) mit einstellbarem Gang unterhalb der Endräder (141, 151) der besagten Absätze (14, 15), parallel zur Ebene der besagten Kette angeordnet ist, wobei deren Länge dem die besagten Endräder (141, 151) trennenden Abstand ungefähr gleich ist.

4. Vorrichtung nach irgendeinem der vorhergehenden Ansprüche, dadurch gekennzeichnet, daß die Ganghöhe der Schraube (5) zuerst nach dem ersten Absatz (14) abnimmt und bis zum zweiten Absatz (15) zunimmt.

5. Vorrichtung nach irgendeinem der vorhergehenden Ansprüche, dadurch gekennzeichnet, daß eine parallel zu der Kette (1) angeordnete zweite Kette (6) um die Breite einer Gruppe (30) im Abstand voneinander liegende Anschlagpaare (62) umfaßt, die vor dem Hochfahren des beweglichen Deckels (22) des Wagens (2) die besagten Gruppen (30) umgreifen.

6. Vorrichtung nach Anspruch 1, dadurch gekennzeichnet, daß die Deckel (22) Greifmittel umfassen, die bei deren Hochfahren zum Einsatz kommen und das Greifen von mehreren Produkteinheiten erlauben.

7. Vorrichtung nach Anspruch 1 oder Anspruch 6, dadurch gekennzeichnet, daß die Deckel (22) mehrere parallelipedförmige Fächer (7, 8, 9) umfaßen, die unter der Wirkung eines Satzes Schubstangen (100) zueinander verschieblich sind, die die einzelnen Fächer (7, 8, 9) miteinander verbinden und selbst mit einer mechanischen Vorrichtung (107, 16, 17) verbunden sind , die die relative Verstellung des einen oder mehrerer Fächer relativ zu den anderen steuert.
